# EUROPEAN PATENT SPECIFICATION

(11) **EP 3 410 426 B1**
(45) Date of publication and mention of the grant of the patent: **06.09.2023**
(21) Application number: 16887940.1
(22) Date of filing: 28.01.2016
(51) Int. Cl.: G09G 5/00, G06F 3/14, G09G 5/12

(54) **MULTI-DISPLAY DEVICE AND METHOD FOR CONTROLLING MULTI-DISPLAY DEVICE**
MULTIANZEIGEVORRICHTUNG UND VERFAHREN ZUM BETRIEB DER MULTIANZEIGEVORRICHTUNG
DISPOSITIF D'AFFICHAGE MULTIPLE ET PROCÉDÉ DESTINÉS À COMMANDER LE DISPOSITIF D'AFFICHAGE MULTIPLE

(43) Date of publication of application: 05.12.2018
(73) Proprietor: Sharp NEC Display Solutions, Ltd., Tokyo (JP)
(72) Inventor: YAMAMOTO Kenji, Tokyo 108-0073 (JP)
(74) Representative: Betten & Resch
(86) International application number: PCT/JP2016/052512
(87) International publication number: WO 2017/130353

(56) References cited:
- EP-A2- 1 589 520
- JP-A- H01 185 074
- JP-A- H04 349 492
- JP-A- 2012 138 712
- JP-A- 2012 138 712
- US-A1- 2008 143 637

## Description

### TECHNICAL FIELD

The present invention relates to a multi-display device and a method for controlling the multi-display device.

### BACKGROUND ART

In multi-display devices, it is important to eliminate misalignment of images displayed at the seams between upper and lower portions of display devices (hereinafter, referred to as "body cracking") in order to display a single image using multiple display devices.

Patent Literature Document 1 discloses a technology for a multi-display device to delay the start time of vertical scanning on a display panel, which is disposed at a lower position between two display panels vertically adjoining together, by one frame. According to this technology, it is possible to eliminate the body cracking at the seams between two display panels aligned vertically.

### CITATION LIST

### PATENT LITERATURE DOCUMENT

Patent Literature Document 1: Japanese Patent Application Publication No. 2001-222269
US 2008/143637 A discloses a multi-display device including a plurality of display devices daisy-chained together, wherein the display device includes an image output controller configured to select whether to delay an input video signal by a predetermined period or not according to a position of the display device and to thereby output the input video signal delayed by the predetermined period based on a selected result as an output signal to a next-stage display device.
EP 1 589 520 A discloses inserting a fixed delay between displays of a multi-display device.
JP 2012 138712 A discloses daisy-chaining a plurality of displays of a multi-display device, wherein each display delays the signal internally.

### SUMMARY OF INVENTION

### TECHNICAL PROBLEM

However, the multi-display device disclosed by Patent Literature Document 1 includes a single image processor and a plurality of image displays. The image processor carries out a process of converting video signals, which are input into the multi-display device, into signals displayed on multiple image displays. Multiple image displays have their own frame memories, wherein the lower image display delays the start time of vertical scanning for signals processed by the image processor by one frame.

To increase the number of display panels installed in the multi-display device, a process of inputting signals, which are converted by the image processor, into the image displays should be complicated because of additionally implementing a process of selecting the lower image display. To prevent a complicated input process of signals, which are converted by the image processor, into the image displays, the multi-display device disclosed by Patent Literature Document 1 needs to limit the number of display panels (i.e. the number of display panels aligned in a vertical direction) to two.

The problem to be solved by the invention is that the multi-display device is unable to increase the number of display panels. That is, it is an object of the invention to provide a multi-display device and a control method for a multi-display device, which can prevent the occurrence of body cracking at the seams between two display panels vertically adjoining together and which can increase the number of display panels.

### SOLUTION TO PROBLEM

The solution to the problem is claimed in the independent claims.

### ADVANTAGEOUS EFFECTS OF INVENTION

According to the present invention, an image output controller is configured to delay the start time of vertical scanning for a lower display device, which is disposed at a lower position among two display devices which are vertically aligned to form a multi-display device, by one frame. Accordingly, an image processor does not need to carry out a process of selecting a lower image display while an image display carries out a process of converting video signals into signals displayable on a display panel; hence, image displays do not necessarily install a frame memory, and therefore, they do not need to delay the start time of vertical scanning for signals processed by an image processor by one frame. Thus, the image output controller is configured to carry out both the delay processes executed by the image displays and the selecting process of the lower image display executed by the image processor even when the number of display panels is increased in the multi-display device; hence, it is possible to ease restrictions on an input process of signals, which are converted by the image processor, into the image displays. Accordingly, it is possible to prevent the occurrence of body cracking at the seams between two display panels vertically adjoining together irrespective of the increased number of display panels (in particular, even when the number of display panels is increased to three or more). According to the present invention, which relates to a multiple-display device having increased the number of display panels and a control method for the multi-display device, it is possible to prevent the occurrence of body cracking at the seams between two display panels vertically adjoining together.

### BRIEF DESCRIPTION OF DRAWINGS

Fig. 1 is a block diagram showing the configuration of a multi-display device according to one embodiment of the present invention.
Fig. 2 is a block diagram showing the configuration of a display device shown in Fig. 1.
Fig. 3 is a diagram showing an image output controller 23 of the display device shown in Fig. 2.
Fig. 4 is a flowchart showing the processing of the display device shown in Fig. 1.
Fig. 5 is a block diagram showing the configuration of a multi-display device configured to output sound.

### DESCRIPTION OF EMBODIMENT

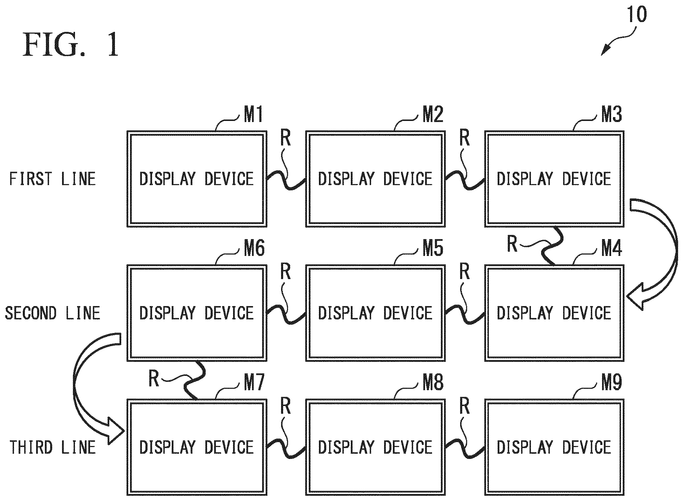

Hereinafter, a multi-display device according to one embodiment of the present invention will be described with reference to drawings. Fig. 1 is a block diagram showing the configuration of the multi-display device according to the embodiment of the present invention.

Fig. 1 shows a configuration example of a multi-display device 10 having multiple display devices daisy-chained together. It shows an example of connecting nine display devices M1, M2,..., M9 in a manner of three rows by three columns. That is, the display devices are aligned at positions each represented by the number of rows and the number of columns in a matrix for aligning the display devices. For example, the display device M1 is disposed at first row by first column; the display device M2 is disposed at first row by second column; the display device M3 is disposed at first row by third column. Similarly, the display device M4 is disposed at second row by third column; the display device M5 is disposed at second row by second column; the display device M6 is disposed at second row by first column. Similarly, the display device M7 is disposed at third row by first column; the display device M8 is disposed at third row by second column; the display device M9 is disposed at third row by third column.

The display devices are connected together via paths R, e.g. serial cables. As shown in Fig. 1, the display device M1 is connected to the display device M2 via the path R; the display device M2 is connected to the display device M3 via the path R; the display device M3 is connected to the display device M4 via the path R. Thus, it is possible to transmit video signals, displayed on each display device, from the first stage of the display device M1 to the last stage of the display device M9 among the display devices connected together via the paths.

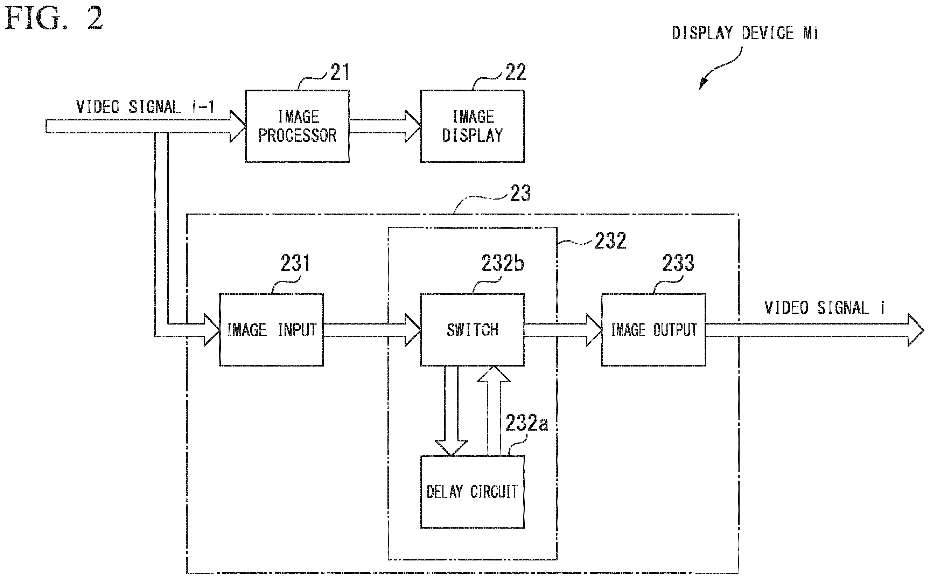

Fig. 2 is a block diagram showing the configuration of the display device shown in Fig. 1. Fig. 2 shows the configuration of a display device Mi with number i (where i equals any number among 1 through 9) counted from the first display device among the display devices M1 through M9 shown in Fig. 1.

The display device Mi inputs and displays a video signal i-1 on a liquid crystal panel of an image display 22. In addition, the display device Mi carries out a process of transmitting or not transmitting the input video signal i-1 through a delay circuit 232a of an image output controller 23, thus producing an output signal after processing as a video signal i to be output to the next stage of the display device, i.e. a display device Mi+1.

The display device Mi includes an image processor 21, the image display 22, and the image output controller 23.

The image processor 21 carries out a process of converting the video signal i-1, which is input to the display device Mi, into a signal to be displayed on the display panel of the image display 22.

The image display 22 including a liquid crystal panel converts the processed signal of the image processor 21 into a signal having a receivable format with the liquid crystal panel, thus providing the signal to the liquid crystal panel.

The image output controller 23 includes an image input part 231, a delay circuit controller 232, and an image output part 233.

The delay circuit controller 232 includes the delay circuit 232a and a switch 232b.

The image input part 231 sends the video signal i-1, which is input to the display device Mi, to the switch 232b of the delay circuit controller 232.

The delay circuit 232a includes a frame memory configured to store data for a predetermined period corresponding to one frame; hence, it produces an output signal by delaying the video signal i-1, which is input to the display device Mi, by the predetermined period corresponding to one frame, thus supplying the output signal to the switch 232b.

The switch 232b selectively makes a decision whether to supply the video signal i-1 input to the display device Mi to the delay circuit 232a according to the selected result.

According to the present embodiment incurring a possibility that each display device may be disposed at an indefinite position changeable in its line number, for example, the image output controller 23 produces the selected result 1 for delaying the input video signal i-1 by the predetermined period corresponding to one frame when the display device M3 is changed in its line number and relocated to the display device M4 or when the display device M6 is changed in its line number and relocated to the display device M7. Alternatively, the image output controller 23 produces the selected result 2 for not delaying the input video signal i-1 when each display device is not changed in position in terms of its line number, for example, when the display device M1 is relocated to the display device M2 without changing its line number, or when the display device M2 is relocated to the display device M3 without changing its line number.

According to the selected result 1, the switch 232b supplies the video signal i-1 input to the display device Mi to the delay circuit 232a, which in turn produces an output signal by delaying the video signal i-1 by the predetermined period corresponding to one frame, and therefore, the delay circuit controller 232 supplies the output signal to the image output part 233.

According to the selected result 2, the switch 232b inhibits the video signal i-1 input to the display device Mi from being supplied to the delay circuit 232a, and therefore, the delay circuit controller 232 directly supplies an output signal, i.e. the video signal i-1 input to the display device Mi, to the image output part 233.

The image output part 233 outputs the output signal of the delay circuit 232, which is given from the switch 232b, to the next stage of the display device, i.e. the display device Mi+1.

As described above, the display device Mi having the aforementioned configuration carries out a process of transmitting or not transmitting the input video signal i-1 through the delay circuit 232a in the image output controller 23, thus producing the processed signal as an output signal to be sent to the next stage of the display device, i.e. the display device Mi+1.

Next, a control operation for the image output controller 23, serving as the technical feature of the display device Mi according to the present invention, will be described with reference to the drawings.

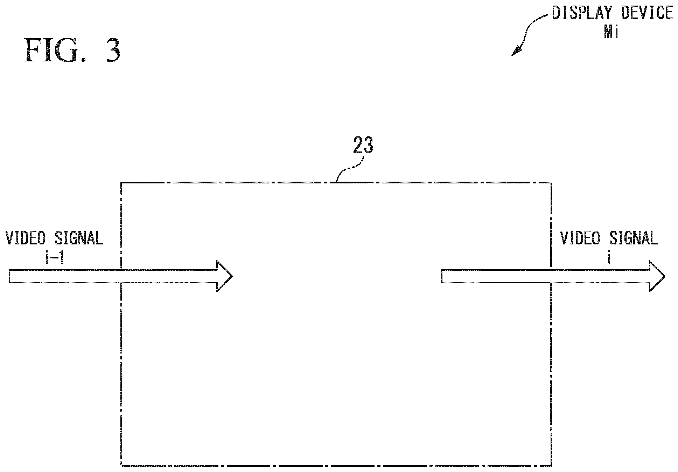

Fig. 3 is a diagram showing the image output controller 23 among the constituent elements of the display device shown in Fig. 2. In Fig. 3, parts identical to those shown in Fig. 2 are denoted using the same reference signs.

The image output controller 23 includes a frame memory configured to store data for a predetermined period corresponding to one frame, and therefore, it produces an output signal by delaying a video signal i-1, which is input to the display device Mi, by the predetermined period corresponding to one frame, and then forwarding the output signal as a video signal i to the next stage of the display device Mi+1.

In addition, the image output controller 23 selects whether to forward the video signal i-1, which is input to the display device Mi, as the video signal i to the next stage of the display device Mi+1 according to the selected result.

In the present embodiment, the image output controller 23 produces the selected result 1 for delaying the input video signal i-1 by the predetermined period corresponding to one frame when the display device is disposed at a position changeable in the line number. Alternatively, the image output controller 23 produces the selected result 2 for not delaying the input video signal i-1 when the display device is disposed at a position unchangeable in the line number.

According to the selected result 1, the image output controller 23 produces an output signal by delaying the video signal i-1 input to the display device Mi by the predetermined period corresponding to one frame, and then forwarding the output signal as the video signal i to the display device Mi+1.

According to the selected result 2, the image output controller 23 produces an output signal as the video signal i-1 input to the display device Mi, and then forwarding the output signal as the video signal i to the display device Mi+1.

### [First Embodiment]

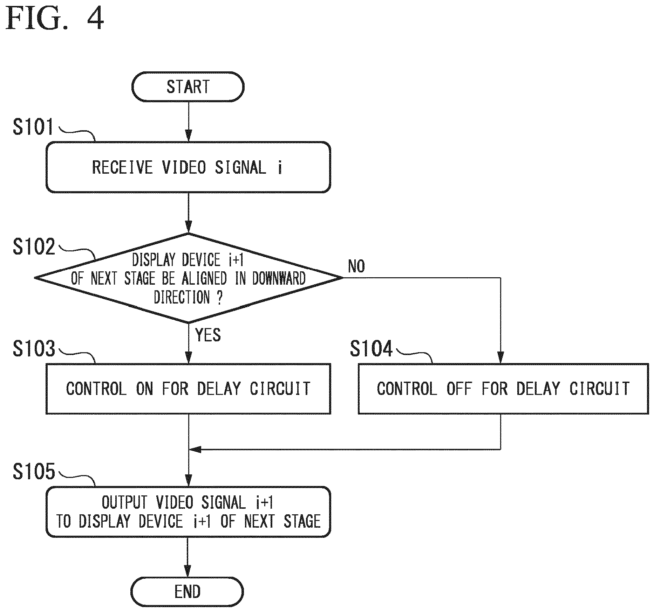

Returning back to Fig. 1, the operation of the multi-display device 10 including a plurality of display devices M1 through M9 daisy-chained together will be described with reference to Fig. 4. Fig. 4 is a flowchart showing the processing of the display device Mi shown in Fig. 1.

As shown by arrow symbols in Fig. 1, the delay circuit controller 232 carries out a one-frame delay process with respect to the display device M3 and M6. The processing of the display device Mi (where i= 3, 6) will be described below.

The image input part 231 of the display device Mi receives a video signal i (step S101).

The image output controller 23 of the display device Mi determines whether the next stage of the display device Mi+1 is disposed in a lower direction or not (step S102). Specifically, the image output controller 23 produces the selected result 1 or 2 upon selecting whether the input video signal i-1 should be delayed or not according to the position of the display device.

The image output controller 23 of the display device Mi produces the selected result 1 for delaying the input video signal i-1 because the display device Mi is disposed at the position changeable in the line number (step S102 - Yes).

The delay circuit controller 232 of the display device Mi controls the delay circuit 232a to be turned on (step S103). Specifically, the switch 232b sends the video signal i-1 input to the display device Mi to the delay circuit 232a, which in turn delays the video signal i-1 by one frame so as to supply an output signal to the image output part 233.

The image output part 233 of the display device Mi sends the video signal i to the next stage of the display device Mi+1 (step S105).

The delay circuit controller 232 bypasses a delay process and therefore does not involve in frame delay with respect to the display devices M1-M2, the display devices M4-M5, and the display devices M7-M9. The processing of the display device Mi (where i=1-2, 4-5, 7-9) will be described below.

The image input part 231 of the display device Mi receives a video signal i (step S101).

The image output controller 23 of the display device Mi determines whether the next state of the display device Mi+1 is disposed in a lower direction or not (step S102). Specifically, the image output controller 23 produces the selected result 1 or 2 upon selecting whether the input video signal i-1 should be delayed by the predetermined period or not according to the position of the display device.

The image output controller 23 of the display device Mi produces the selected result 2 for not delaying the input video signal i-1 because the display device Mi is disposed at the position unchangeable in the line number (step S102 - No).

The delay circuit controller 232 of the display device Mi controls the delay circuit 232a to be turned off (step S104). Specifically, the switch 232b produces an output signal as the video signal i-1 input to the display device Mi without conducting the input video signal i-1 of the display device Mi to the delay circuit 232a, and then supplying the output signal to the image output part 233.

The image output part 233 of the display device Mi sends the video signal i to the next stage of the display device Mi+1 (step S105).

As a result, the display devices M4, M5, M6 disposed at the second line counted from the uppermost position carry out rendering with one-frame delaying of images after the rendering of the display devices M1, M2, M3 disposed at the first line; hence, it is possible to eliminate body cracking between the display devices disposed at the upper and lower positions. Since the delay circuit controller 232 of the display device M6 carries out a one-frame delay process as well, it is possible to eliminate body cracking between a series of display devices M4, M5, M6 and a series of display devices M7, M8, M9.

As described above, the multi-display device 10 of the present invention is a multi-display device including a plurality of display devices M1 through M9 daisy-chained together, wherein the display device Mi selects whether to delay the input video signal i-1 by the predetermined period or not according to the positon of the display device, and therefore, the display device Mi includes the image output controller 23 configured to forward an output signal as a video signal i to the next stage of the display device.

The image output controller 23 of the multi-display device 10 includes the delay circuit 232a configured to produce an output signal by delaying an input video signal by the predetermined period, and the switch 232b configured to determine whether to supply the input video signal to the delay circuit 232a or not according to the selected result.

The position of the display device Mi located in the multi-display device 10 is represented by the line number and the column number in a matrix for aligning a plurality of display devices. When the display device is disposed at the position changeable in the line number, the display device produces an output signal by delaying the input video signal i-1 by the predetermined period, and then forwarding the output signal as the video signal i to the next stage of the display device.

In the multi-display device 10, the predetermined period is a delay time corresponding to one frame of the input video signal.

According to the present invention in which the image processor 21 does not carry out a process of selecting the lower stage of the image display while the image display 22 carries out a process of converting video signal into signal displayable on the display panel, the image display 22 does not need to install a frame memory, and therefore, it is unnecessary to delay the start time of vertical scanning on the processed signals of the image processor 21 by one frame. For this reason, even when the number of display panels is increased in the multi-display device 10, it is possible to ease restrictions on the image processor 21 implementing the input process of the converted signals into the image display 22 because the image output controller 23 carries out both the delay process executed by the image display 22 and the selecting process of selecting the lower image display 22 executed by the image processor 21. Therefore, it is possible to prevent the occurrence of body cracking at the seams between two display panels vertically adjoining together even when the number of display panels is increased to a larger number (in particular, increased to three or more). According to the present invention, it is possible to prevent the occurrence of body cracking at the seams between two display panels vertically adjoining together in the multi-display device, which includes the increased number of display panels, and the control method of the multi-display device.

In this connection, it is possible to make settings for determining "whether the next stage of the display device Mi+1 is disposed in the lower direction or not" as shown in Fig. 4 according to the intension of the user setting up the multi-display device 10, however, it is possible to automatically control settings with respect to the multi-display device 10 using software applications.

Even when a plurality of display devices having different frame delay values are aligned in a horizontal direction, it is possible to eliminate misalignment of displayed images by controlling the delay circuit 232a based on delay values. In the case of a delay difference of one frame or more, for example, it is possible to mount multiple frame memories on the delay circuit 232a, or it is possible to interpose multiple frame memories each configured to delay signal by one frame between the display devices.

### [Second Embodiment]

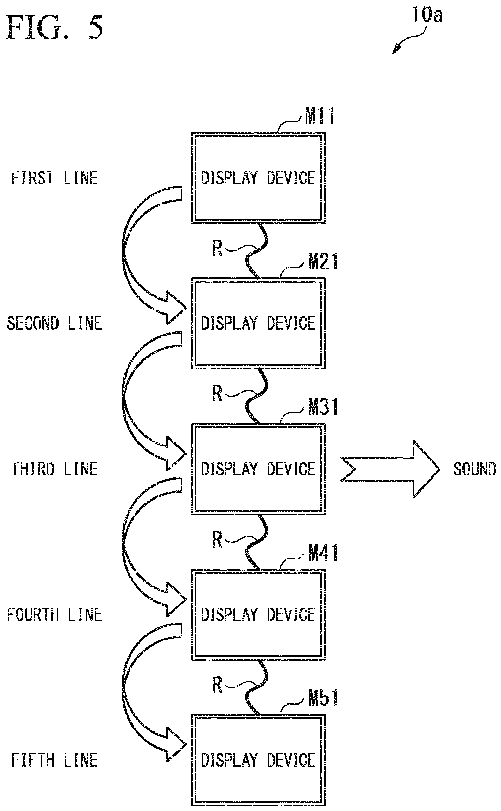

Fig. 5 is a block diagram showing the configuration of a multi-display device configured to produce sound. Fig. 5 shows a configuration example of a multi-display device 10a including a plurality of display devices daisy-chained together. It uses an example of five display devices M11, M21, M31, M41, and M51 which are aligned in five rows by one column and connected together via paths R. That is, the display device M11 is disposed at one row by one column; the display device M21 is disposed at second row by one column; the display device M31 is disposed at third row by one column; the display device M41 is disposed at fourth row by one column; the display device M51 is disposed at fifth row by one column.

As shown by arrow symbols in Fig. 5, the delay circuit controller 232 carries out a one-frame delay process with respect to the display devices M11 through M41.

According to the multi-display device 10a similar to the multi-display device 10 of the first embodiment, it is possible to carry out a delay processes for multiple display devices simply using a one-frame memory. Similar to the multi-display device 10 of the first embodiment, it is possible to prevent images from being displayed in a zigzag manner because video signals are sequentially delayed in the order from the uppermost display device to the lowermost display device, and therefore, it is possible to smoothly display images entirely on multiple display devices. That is, it is possible to prevent the occurrence of body cracking at the seams between two display devices vertically adjoining together.

As to time lags between sounds produced by five display devices vertically aligned as shown in Fig. 5, for example, it is possible to average delay values by producing sound from the intermediate display device, i.e. the display device M31 disposed at the third row; hence, it is possible to produce sound without any discomfort of hearing due to a reduction of time lags between sounds entirely.

### INDUSTRIAL APPLICABILITY

According to the multi-display device of the foregoing embodiments, it is possible to prevent the occurrence of body cracking at the seams between two display panels vertically adjoining together, and therefore, it is possible to provide the multi-display device having increased the number of display panels.

### REFERENCE SIGNS LIST

10 multi-display device
21 image processor
22 image display
23 image output controller
231 image input part
232 delay circuit controller
233 image output part
232a delay circuit
232b switch
M1, M2, M3, M4, M5, M6, M7, M8, M9, M11, M21, M31, M41, M51 display device
R path

## Claims

1. A multi-display device (10, 10a) comprising a plurality of display devices (M1-M9, M11-M51) which are connected together in a daisy-chained fashion,
wherein the plurality of display devices comprises M x N displays spatially arranged in a matrix of M lines and N columns,
wherein for each display device which is connected to a next-stage display device in the daisy chain, the next-stage display device is either on a same line or a next line of the matrix,
wherein each display device has position information indicating its position in the matrix and indicating if the display device is connected to the next-stage display device on the next line of the matrix or if the display device is connected to the next-stage display device on the same line of the matrix, and
wherein each of the display devices comprises
an image output controller (23) configured to select, according to the position information, whether or not to delay an input video signal by a predetermined period and to thereby output a delayed video signal to the next-stage display device, and
wherein the image output controller (23) is configured to output the delayed video signal to the next-stage display device when the position information indicates that the display device is connected to the next-stage display device on the next line of the matrix, and to output a non-delayed video signal to the next-stage display device when the position information indicates that the display device is connected to the next-stage display device on the same line of the matrix.

2. The multi-display device according to claim 1, wherein the image output controller (23) of each of the display devices comprises
a delay circuit (232a) configured to delay the input video signal by the predetermined period, and
a switch (232b) configured to select whether or not to supply the input video signal to the delay circuit (232a) according to the position information indicating if the display device is connected to the next-stage display device on the next line of the matrix or if the display device is connected to the next-stage display device on the same line of the matrix, respectively.

3. The multi-display device according to claim 1 or 2, wherein the predetermined period is a one-frame period of the input video signal representing a video configured of a plurality of frames.

4. A control method for a multi-display device (10, 10a) according to claim 1 and comprising a plurality of display devices (M1-M9, M11-M51) that are daisy-chained together,
wherein the plurality of display devices comprises M x N displays spatially arranged in a matrix of M lines and N columns,
wherein for each display device which is connected to a next-stage display device in the daisy chain, the next-stage display device is either on a same line or a next line of the matrix,
wherein each display device has position information indicating its position in the matrix and indicating if the display device is connected to the next-stage display device on the next line of the matrix or if the display device is connected to the next-stage display device on the same line of the matrix, and
wherein each of the display devices implements the method comprising:
selecting, according to the positon information, whether or not to delay an input video signal by a predetermined period,
outputting a delayed video signal to the next-stage display device when the position information indicates that the display device is connected to the next-stage display device on the next line of the matrix" and
outputting a non-delayed video signal to the next-stage display device when the position information indicates that the display device is connected to the next-stage display device on the same line of the matrix.

## Patentansprüche

1. Mehrfachanzeigevorrichtung (10, 10a), die eine Vielzahl von Anzeigevorrichtungen (M1-M9, M11-M51) umfasst, die auf eine Daisy-Chain-Weise miteinander verbunden sind,
wobei die Vielzahl von Anzeigevorrichtungen M x N Anzeigen umfasst, die räumlich in einer Matrix aus M Zeilen und N Spalten angeordnet sind,
wobei für jede Anzeigevorrichtung, die mit einer Anzeigevorrichtung einer nächsten Stufe in der Daisy-Chain verbunden ist, die Anzeigevorrichtung einer nächsten Stufe in entweder einer selben Zeile oder einer nächsten Zeile der Matrix ist,
wobei jede Anzeigevorrichtung Positionsinformation hat, die ihre Position in der Matrix anzeigt und anzeigt, ob die Anzeigevorrichtung mit der Anzeigevorrichtung einer nächsten Stufe in der nächsten Zeile der Matrix verbunden ist oder ob die Anzeigevorrichtung mit der Anzeigevorrichtung einer nächsten Stufe in derselben Zeile der Matrix verbunden ist, und
wobei jede der Anzeigevorrichtungen folgendes umfasst:
eine Bildausgabesteuerung (23), die konfiguriert ist, um gemäß der Positionsinformation auszuwählen, ob ein eingegebenes Videosignal um eine vorbestimmte Periode zu verzögern ist oder nicht, und um dadurch ein verzögertes Videosignal zur Anzeigevorrichtung einer nächsten Stufe auszugeben, und
wobei die Bildausgabesteuerung (23) konfiguriert ist, um das verzögerte Videosignal zur Anzeigevorrichtung einer nächsten Stufe auszugeben, wenn die Positionsinformation anzeigt, dass die Anzeigevorrichtung mit der Anzeigevorrichtung einer nächsten Stufe in der nächsten Zeile der Matrix verbunden ist, und um ein nicht verzögertes Videosignal zur Anzeigevorrichtung einer nächsten Stufe auszugeben, wenn die Positionsinformation anzeigt, dass die Anzeigevorrichtung mit der Anzeigevorrichtung einer nächsten Stufe in derselben Zeile der Matrix verbunden ist.

2. Mehrfachanzeigevorrichtung nach Anspruch 1, wobei die Bildausgabesteuerung (23) von jeder der Anzeigevorrichtungen folgendes umfasst:
eine Verzögerungsschaltung (232a), die konfiguriert ist, um das eingegebene Videosignal um die vorbestimmte Periode zu verzögern, und
einen Schalter (232b), der konfiguriert ist, um gemäß der Positionsinformation, die jeweils anzeigt, ob die Anzeigevorrichtung mit der Anzeigevorrichtung einer nächsten Stufe in der nächsten Zeile der Matrix verbunden ist oder ob die Anzeigevorrichtung mit der Anzeigevorrichtung einer nächsten Stufe in derselben Zeile der Matrix verbunden ist, auszuwählen, ob das eingegebene Videosignal zur Verzögerungsschaltung (232a) zuzuführen ist oder nicht.

3. Mehrfachanzeigevorrichtung nach Anspruch 1 oder 2, wobei die vorbestimmte Periode eine Periode von einem Frame des eingegebenen Videosignals ist, das eine Video darstellt, das aus einer Vielzahl von Frames konfiguriert ist.

4. Steuerungsverfahren für eine Mehrfachanzeigevorrichtung (10, 10a) nach Anspruch 1 und eine Vielzahl von Anzeigevorrichtungen (M1-M9, M11-M51) umfassend, die auf eine Daisy-Chain-Weise miteinander verbunden sind,
wobei die Vielzahl von Anzeigevorrichtungen M x N Anzeigen umfasst, die räumlich in einer Matrix aus M Zeilen und N Spalten angeordnet sind,
wobei für jede Anzeigevorrichtung, die mit einer Anzeigevorrichtung einer nächsten Stufe in der Daisy-Chain verbunden ist, die Anzeigevorrichtung einer nächsten Stufe in entweder einer selben Zeile oder einer nächsten Zeile der Matrix ist,
wobei jede Anzeigevorrichtung Positionsinformation hat, die ihre Position in der Matrix anzeigt und anzeigt, ob die Anzeigevorrichtung mit der Anzeigevorrichtung einer nächsten Stufe in der nächsten Zeile der Matrix verbunden ist oder ob die Anzeigevorrichtung mit der Anzeigevorrichtung einer nächsten Stufe in derselben Zeile der Matrix verbunden ist, und
wobei jede der Anzeigevorrichtungen das Verfahren implementiert, das folgendes umfasst:
Auswählen, gemäß der Positionsinformation, ob ein eingegebenes Videosignal um eine vorbestimmte Periode zu verzögern ist oder nicht,
Ausgeben eines verzögerten Videosignals zur Anzeigevorrichtung einer nächsten Stufe, wenn die Positionsinformation anzeigt, dass die Anzeigevorrichtung mit der Anzeigevorrichtung einer nächsten Stufe in der nächsten Zeile der Matrix verbunden ist, und
Ausgeben eines nicht verzögerten Videosignals zur Anzeigevorrichtung einer nächsten Stufe, wenn die Positionsinformation anzeigt, dass die Anzeigevorrichtung mit der Anzeigevorrichtung einer nächsten Stufe in derselben Zeile der Matrix verbunden ist.

## Revendications

1. Un dispositif multi-affichage (10, 10a) comprenant une pluralité de dispositifs d'affichage (M1-M9, M11-M51) qui sont connectés les uns aux autres en guirlande,
dans lequel la pluralité de dispositifs d'affichage comprend M x N afficheurs agencés dans l'espace dans une matrice de M lignes et N colonnes,
dans lequel pour chaque dispositif d'affichage qui est connecté à un dispositif d'affichage de l'étage suivant dans la guirlande, le dispositif d'affichage de l'étage suivant est soit sur une même ligne soit sur une ligne suivante de la matrice,
dans lequel chaque dispositif d'affichage a des informations de position indiquant sa position dans la matrice et indiquant si le dispositif d'affichage est connecté au dispositif d'affichage de l'étage suivant sur la ligne suivante de la matrice ou si le dispositif d'affichage est connecté au dispositif d'affichage de l'étage suivant sur la même ligne de la matrice, et
dans lequel chacun des dispositifs d'affichage comprend
un contrôleur (23) d'émission d'image configuré pour sélectionner, selon les informations de position, s'il faut ou non retarder un signal vidéo d'entrée d'une période prédéterminée et pour ainsi sortir un signal vidéo retardé vers le dispositif d'affichage de l'étage suivant, et
dans lequel le contrôleur (23) d'émission d'image est configuré pour délivrer le signal vidéo retardé au dispositif d'affichage de l'étage suivant lorsque les informations de position indiquent que le dispositif d'affichage est connecté au dispositif d'affichage de l'étage suivant sur la ligne suivante de la matrice, et pour émettre un signal vidéo non retardé vers le dispositif d'affichage de l'étage suivant lorsque les informations de position indiquent que le dispositif d'affichage est connecté au dispositif d'affichage de l'étage suivant sur la même ligne de la matrice.

2. Le dispositif multi-affichage selon la revendication 1, dans lequel le contrôleur (23) d'émission d'image de chacun des dispositifs d'affichage comprend
un circuit de retard (232a) configuré pour retarder le signal vidéo d'entrée de la période prédéterminée, et
un commutateur (232b) configuré pour sélectionner s'il faut fournir ou non le signal vidéo d'entrée au circuit à retard (232a) selon les informations de position indiquant si le dispositif d'affichage est connecté au dispositif d'affichage de l'étage suivant sur la ligne suivante de la matrice ou si le dispositif d'affichage est connecté au dispositif d'affichage de l'étage suivant sur la même ligne de la matrice, respectivement.

3. Le dispositif multi-affichage selon la revendication 1 ou la revendication 2, dans lequel la période prédéterminée est une période d'une image du signal vidéo d'entrée représentant une vidéo configurée d'une pluralité d'images.

4. Un procédé de commande d'un dispositif multi-affichage (10, 10a) selon la revendication 1 et comprenant une pluralité de dispositifs d'affichage (M1-M9, M11-M51) connectés en guirlande,
dans lequel la pluralité de dispositifs d'affichage comprend M × N afficheurs agencés dans l'espace dans une matrice de M lignes et N colonnes,
dans lequel pour chaque dispositif d'affichage qui est connecté à un dispositif d'affichage de l'étage suivant dans la guirlande, le dispositif d'affichage de l'étage suivant est soit sur une même ligne soit sur une ligne suivante de la matrice,
dans lequel chaque dispositif d'affichage a des informations de position indiquant sa position dans la matrice et indiquant si le dispositif d'affichage est connecté au dispositif d'affichage de l'étage suivant sur la ligne suivante de la matrice ou si le dispositif d'affichage est connecté au dispositif d'affichage de l'étage suivant sur la même ligne de la matrice, et
dans lequel chacun des dispositifs d'affichage met en oeuvre le procédé comprenant :
le fait de sélectionner, selon les informations de position, s'il faut ou non retarder un signal vidéo d'entrée d'une période prédéterminée,
le fait de délivrer un signal vidéo retardé au dispositif d'affichage de l'étage suivant lorsque les informations de position indiquent que le dispositif d'affichage est connecté au dispositif d'affichage de l'étage suivant sur la ligne suivante de la matrice, et
le fait de délivrer un signal vidéo non retardé au dispositif d'affichage de l'étage suivant lorsque les informations de position indiquent que le dispositif d'affichage est connecté au dispositif d'affichage de l'étage suivant sur la même ligne de la matrice.
